# EUROPEAN PATENT APPLICATION

(11) **EP 2 642 564 A1**
(43) Date of publication of application: **25.09.2013**
(21) Application number: 12192693.5
(22) Date of filing: 15.11.2012
(51) Int. Cl.: H01M 4/36, H01M 4/505, H01M 4/525, H01M 4/62, H01M 10/052, H01M 4/485

(54) **Positive electrode active material, a method of preparing the same, and lithium secondary battery including the same**

(30) Priority: 23.03.2012 KR 20120030121
(71) Applicant: Samsung Corning Precision Materials Co., Ltd., Gyeongsangbuk-do 730-725 (KR)
(72) Inventor: Lee, Mi Sun, Asan-si 336-841 (KR); Cho, Yun Ju, Asan-si 336-841 (KR); Kim, Se Won, Asan-si 336-841 (KR); Yun, Pil Sang, Asan-si 336-841 (KR); Lee, Doo Kyun, Asan-si 336-841 (KR); Lee, Ha Yeon, Asan-si 336-841 (KR); Choi, Shin Jung, Asan-si 336-841 (KR)
(74) Representative: Gulde Hengelhaupt Ziebig & Schneider

(57) **Abstract**

Provided are a positive electrode active material, a method of preparing the same, and a lithium secondary battery using the positive electrode active material, and more particularly, a positive electrode active material in which a surface of layer-structured lithium transition metal composite oxide is coated with one or more indium-based compounds selected from the group consisting of indium oxides and alloys including indium, a method of preparing the positive electrode active material, and a lithium secondary battery using the positive electrode active material. According to the present disclosure, degradation of cycle characteristics according to repetitive discharge of a battery may be prevented and thermal stability and rate characteristics may be improved.

## Description

The present invention relates to a layer-structured lithium transition metal composite oxide-based positive electrode active material, a method of preparing the same, and a lithium secondary battery using the positive electrode active material.

### Description of the Related Art

Demands for a positive electrode material for a secondary battery having high safety, long lifetime, high energy density, and high power characteristics have been increase, as an application range of lithium (Li) secondary battery is extended from small electronic devices to electric vehicles and power storage.

Layer-structured lithium cobalt oxides have been selected and used as a positive electrode material from the beginning of the development of lithium secondary batteries in the 1990s and have a high market share, because the lifetime and charge and discharge rate characteristics thereof are excellent, and the preparation thereof may be facilitated. However, high price of cobalt used as a raw material of transition metal may serve as a cause of increasing the price of secondary battery, and since cobalt may be easily oxidized, there may be a high risk of explosion at high temperatures and during the occurrence of high impact.

Research into other transition metal substituted binary or ternary oxide have been conducted in order to improve price stability, stable operation performance, and capacity of the lithium cobalt oxides. Recently, as a positive electrode material of a lithium secondary battery, the lithium cobalt oxides are replaced by Li(NiCoMn)O₂ (nickel cobalt manganese (NCM))-based layer-type composite oxides, in which nickel (Ni), cobalt (Co), and manganese (Mn) are used as transition metal. Among these layer-type Li(NiCoMn)O₂-based oxides, xLiMO₂·(1-x)Li₂MnO₃(M=Ni, Co, Mn, 0<x<1)-based positive electrode active materials may also be applied to the fields requiring high power, such as electric vehicles and hybrid vehicles, due to the realization of high voltage, efficient performance of electric power reserve, and manifestation of high capacity, and the development of technique for satisfying requirements of high power, high energy density, and low price has been undertaken by mainly controlling a content of metal.

However, with respect to the layer structure, the layer structure becomes an easily deformable unstable state when Li ions are deintercalated during charging, and since Li ions may not be intercalated into a deformed structure when the layer structure is deformed after the deintercalation, discharge capacity of a lithium battery may decrease as charge and discharge are repeated, and thus, the cycle characteristics thereof may be degraded and the lifetime thereof may be rapidly decreased at high temperatures.

### Summary

An aspect of the present invention provides a positive electrode active material having excellent rate characteristics due to low degradation of cycle characteristics and improved electrical conductivity, because its crystal structure does not collapse even in the case that charge and discharge are repeated.

Another aspect of the present invention provides a lithium secondary battery including the positive electrode active material.

Another aspect of the present invention provides a method of preparing the positive electrode active material.

According to the present invention there is provided a positive electrode active material including layer-structured lithium transition metal composite oxide expressed by the following Chemical Formula 1, wherein a surface of the lithium transition metal composite oxide is coated with one or more indium (In)-based compounds selected from the group consisting of indium oxides and alloys including indium:

[Chemical Formula 1] x LiMO₂·(1-x) Li₂MnO₃

where M is one or more selected from the group consisting of magnesium (Mg), nickel (Ni), cobalt (Co), chromium (Cr), aluminum (Al), vanadium (V), iron (Fe), copper (Cu), zinc (Zn), titanium (Ti), strontium (Sr), manganese (Mn), boron (B), and lanthanum (La), and 0<x<1.

According to another embodiment, a lithium secondary battery includes the positive electrode active material.

According to another embodiment, a method of preparing a positive electrode active material includes coating lithium transition metal composite oxide expressed by Chemical Formula 1 by adding and stirring one or more indium-based compounds selected from the group consisting of indium oxides and alloys including indium, and heat treating powder obtained after the coating.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:
FIG. 1 illustrates a scanning electron microscope (SEM) image and an energy dispersive spectroscopy (EDS) mapping image of a positive electrode active material prepared according to Preparation Example 3 of the present disclosure;
FIG. 2 illustrates rate characteristic curves of lithium secondary batteries prepared according to Example 3 and Comparative Example 1 of the present disclosure;
FIG. 3 illustrates discharge capacity curves of the lithium secondary batteries prepared according to Example 3 and Comparative Example 1 of the present disclosure; and
FIG. 4 illustrates differential scanning calorimetry (DSC) graphs for positive electrode active materials of the batteries prepared according to Example 3 and Comparative Example 1 of the present disclosure.

### Detailed Description

Hereinafter, the present disclosure will be described in more detail.

Embodiments provide a positive electrode active material, in which a coating layer formed of an indium (In)-based compound may be formed on a surface of the positive electrode active material. The positive electrode active material according to the present disclosure may prevent a reaction between an electrolyte solution and transition metal by the indium-based compound coating layer formed on the surface thereof and may prevent degradation of cycle characteristics according to charge and discharge. Also, the positive electrode active material may exhibit excellent rate characteristics by improving thermal stability and electrical conductivity.

The positive electrode active material may be layer-structured lithium transition metal composite oxide expressed by the following Chemical Formula 1.

[Chemical Formula 1] x LiMO₂·(1-x) Li₂MnO₃

(where M is one or more selected from the group consisting of magnesium (Mg), nickel (Ni), cobalt (Co), chromium (Cr), aluminum (Al), vanadium (V), iron (Fe), copper (Cu), zinc (Zn), titanium (Ti), strontium (Sr), manganese (Mn), boron (B), and lanthanum (La), and may be Ni, Co, and Mn, and 0<x<1)

Since the indium-based compound coating layer is formed on the surface of the positive electrode active material, the indium-based compound coating layer may prevent the reaction between the electrolyte solution and the transition metal by minimizing contact between the electrolyte solution and the transition metal, and may prevent collapse of the layer structure of the positive electrode active material during the deintercalation (charging) of lithium (Li) ions by protecting the positive electrode active material. Also, the indium-based compound coating layer may improve rate characteristics by decreasing internal resistance of a positive electrode due to good electrical conductivity of the indium-based compound.

The indium-based compound includes one or more selected from the group consisting of indium oxides and alloys including indium, and may include indium oxide in consideration of electrical conductivity and thermal conductivity. For example, the indium-based compound may be one or more selected from the group consisting of In₂O₃, tin (Sn)-doped In₂O₃ (ITO), Zn-doped In₂O₃ (IZO), Sn/Zn co-doped In₂O₃ (ITZO), antimony (Sb)-doped In₂O₃ (IAO), ZnIn₂O₅, Zn₃In₂O₆, Zn₅In₂O₈, CdIn₂O₄, MgIn₂O₄, AgInO₂, and an alloy of indium oxide and one or more of Zn oxide, Sn oxide, gallium (Ga) oxide, thallium (Tl) oxide, Mg oxide, tungsten (W) oxide, and Al oxide. The alloy of indium oxide may be ZnO-In₂O₃, SnO₂-In₂O₃, MgO-In₂O₃, Ga₂O-In₂O₃, or Al₂O₃-In₂O₃.

The coating layer may be formed by including the indium-based compound in an amount range of 0.2 wt% to 6 wt% based on the positive electrode active material, and for example, in an amount range of 0.2 wt% to 4 wt%. In the case that a content of the indium-based compound is less than 0.2 wt%, effects of the inhibition of the side reaction with respect to the electrolyte solution and the improvement of rate characteristics according to the coating of the indium-based compound may not be obtained, and in the case that the content of the indium-based compound is greater than 6 wt%, a uniform coating layer may be difficult to be formed and agglomeration between the indium-based compounds may occur or capacity of a battery may decrease.

A particle diameter of the indium-based compound is in a range of 10 nm to 50 µm and may be in a range of 50 nm to 1 µm. When the particle diameter is included within the foregoing range, a uniform coating layer is formed on the surface of the positive electrode active material and a protective function is accompanied due to the coating layer, and thus, deformation due to the side reaction of the positive electrode active material according to external factors may be prevented and lifetime of the electrode may be improved.

The present disclosure provides a method of preparing an indium-based compound coated positive electrode active material.

The preparation method may include coating and heat treating, and the coating includes adding an indium-based compound to the layer-structured lithium transition metal composite oxide expressed by the foregoing Chemical Formula 1 and stirring. In the coating, the indium-based compound may be added in an amount range of 0.2 wt% to 6 wt% based on the lithium transition metal composite oxide.

In the coating, a surface of the lithium transition metal composite oxide may be coated with the indium-based oxide by using a dry or wet coating method. In the dry coating method, coating may be performed through mixing indium-based compound and lithium transition metal composite oxide by using a ball mill, dry mixer, or NOVILTA apparatus.

In the wet coating method, lithium transition metal composite oxide is added to a coating solution formed of an indium-based compound and stirred to coat the surface of the lithium transition metal composite oxide with the indium-based compound, and the wet coating method may be performed at a temperature in a range of 25°C to 60°C for 1 hour to 24 hours.

Preparing a coating solution and removing a solvent may be further included during the use of the wet coating method. In the preparing of the coating solution, the coating solution is prepared by stirring or ultrasonicating an indium-based compound and a solvent. In the preparing of the coating solution, the indium-based compound is diluted with the solvent to block a reaction with moisture and uniform dispersion of the indium-based compound is achieved in the solvent, thus enabling a coating layer to be easily formed on the surface of the lithium transition metal composite oxide.

The solvent is one or more selected from the group consisting of alcohol having a carbon number of 1 to 6, toluene, hexane, acetone, ether, tetrahydrofuran, dichloromethane, dichloroethane, ethyl acetate, xylene, benzene, ethylbenzene, methylethylketone, dimethyl sulfoxide, dimethylformamide, hexamethylphosphoramide, and methylisobutylketone, and may be alcohol having a carbon number of 1 to 6, and for example, may be ethyl alcohol.

In the removing of the solvent, powder is obtained by removing the solvent through heating the mixture after the coating. The heating temperature may be appropriately selected according to a boiling point of the solvent and may be in a range of 60°C to 120°C. The removing of the solvent may be performed by using an oven or rotary vacuum evaporator.

Drying may be further selectively included after the removing of the solvent. In the drying, the powder is put in a vacuum oven and dried at a temperature in a range of 50°C to 150°C for 1 hour to 3 days.

In the heat treating, the powder obtained in the coating is heat treated to strongly bond the indium-based compound coating layer to the surface of the lithium transition metal composite oxide. The heat treatment is performed at a temperature in a range of 300°C to 700°C for 10 minutes to 12 hours and may be performed for 1 hour to 12 hours, and may be performed by using an electric furnace or microwave oven.

The preparation method may further include pulverizing. In the pulverizing, the powder agglomerated due to the heat treatment is pulverized after the heat treating. A typical method of pulverizing powder may be used as the pulverization method and for example, the pulverizing may be performed by using a grinding mill, a Raymond mill, a hammer mill, a corn crusher, a roller mill, a rod mill, a ball mill, a filler mill, and an attrition mill.

The present disclosure provides a lithium secondary battery including the positive electrode active material. The secondary battery may use a positive electrode formed of the positive electrode active material according to the present disclosure and in addition, may include a negative electrode, a separator, and a non-aqueous electrolyte solution. Structure and preparation method of the secondary battery may be appropriately selected so long as they are well known in the art and are not deviated from the scope of the present disclosure.

The positive electrode may be prepared in such a manner that a positive electrode collector is coated with a composition for forming a positive electrode active material including a positive electrode active material and a binder and dried, and then pressed.

The binder functions to bond between the positive electrode active materials and to fix the positive electrode active materials to the electrode collector, and any binder used in the art may be used without limitation. The binder may be one or more selected from the group consisting of polyvinylidene fluoride, polytetrafluoroethylene, polyvinylchloride, polyvinylpyrrolidone, polyvinyl alcohol, carboxymethyl cellulose (CMC), starch, hydroxypropyl cellulose, polyethylene, polypropylene, a styrene-butadiene rubber, and a fluoro rubber.

The composition for forming a positive electrode active material may be prepared by further selectively adding a solvent such as N-methyl-2-pyrrolidone (NMP), an olefin-based polymer such as polyethylene and polypropylene, and a filler formed of a fibrous material such as glass fibers and carbon fibers to the positive electrode active material and the binder.

The positive electrode collector may be copper, stainless steel, aluminum, nickel, titanium, and baked carbon; copper and stainless steel surface treated with carbon, nickel, titanium, or silver; and an aluminum-cadmium alloy, and various shapes, such as film, sheet, foil, net, porous body, foamed body, and nonwoven fabric, may be used.

The negative electrode may be prepared by coating a negative electrode collector with a composition for forming a negative electrode active material including a negative electrode active material and drying or may be formed of lithium. The composition for forming a negative electrode active material may further selectively include a binder or a conductive agent.

The negative electrode active material may include a carbonaceous material, such as artificial graphite, natural graphite, graphitized carbon fibers, and amorphous carbon, lithium, alloys between lithium and silicon (Si), Al, Sn, lead (Pb), Zn, bismuth (Bi), In, Mg, Ga, or cadmium (Cd), an alloyable metallic compound such as Sn alloy and Al alloy, and a composite including the metallic compound and the carbonaceous material.

The negative electrode collector may be copper, stainless steel, aluminum, nickel, titanium, and baked carbon; copper and stainless steel surface treated with carbon, nickel, titanium, or silver; and an aluminum-cadmium alloy, and various shapes, such as film, sheet, foil, net, porous body, foamed body, and nonwoven fabric, may be used.

The separator is disposed between the negative electrode and the positive electrode, and may be an olefin-based polymer, such as polypropylene, and a sheet or nonwoven fabric formed of glass fibers or polyethylene.

An electrolyte solution having a lithium salt dissolved in a non-aqueous solvent may be used as the non-aqueous electrolyte solution, and the lithium salt may be LiCl, LiBr, Lil, LiClO₄, LiBF₄, LiB₁₀OCl₁₀, LiPF₆, LiCF₃SO₃, LiCF₃CO₂, LiAsF₆, LiSbF₆, LiAlCl₄, CH₃SO₃Li, CF₃SO₃Li, and (CF₃SO₂)₂NLi, or chloroborane lithium.

The non-aqueous electrolyte solution may include a non-aqueous organic solvent, an organic solid electrolyte, or an inorganic solid electrolyte. Examples of the non-aqueous organic solvent may be ethylene carbonate, propylene carbonate, butylene carbonate, vinylene carbonate, dimethyl carbonate, methylethyl carbonate, diethyl carbonate, methyl acetate, ethyl acetate, propyl acetate, methyl propionate, ethyl propionate, γ-butyrolactone, 1,2-dimethoxyethane, tetrahydrofuran, 1,2-dioxane, 2-methyltetrahydrofuran, acetonitrile, dimethylformamide, N-methyl-2-pyrrolidone, dimethyl sulfoxide, 1,3-dimethyl-2-imidazolidinone, sulfolane, and methylsulfolane.

The organic solid electrolyte may be a gel-type polymer electrolyte in which a polymer electrolyte, such as polyethylene oxide and polyacrylonitrile, is impregnated with an electrolyte solution.

Examples of the inorganic solid electrolyte may be nitrides, halides, or sulfates of Li, such as Li₃N, Lil, Li₅Nl₂, Li₃N-Lil-LiOH, LiSiO₄, LiSO₄-Lil-LiOH, Li₂SiS₃, Li₄SiO₄, Li₄SiO₄-Lil-LiOH, and Li₃PO₄-Li₂S-SiS₂.

The secondary battery may be classified as coin type, prismatic type, cylinder type, or pouch type, and since structures and preparation methods of theses batteries are well known in the art, detailed descriptions thereof will be omitted.

Hereinafter, the present disclosure will be described in more detail according to the following examples and comparative example. However, the following examples are merely presented to exemplify the present disclosure, and the protective scope of the present disclosure is not limited thereto.

### Preparation Examples 1 to 6

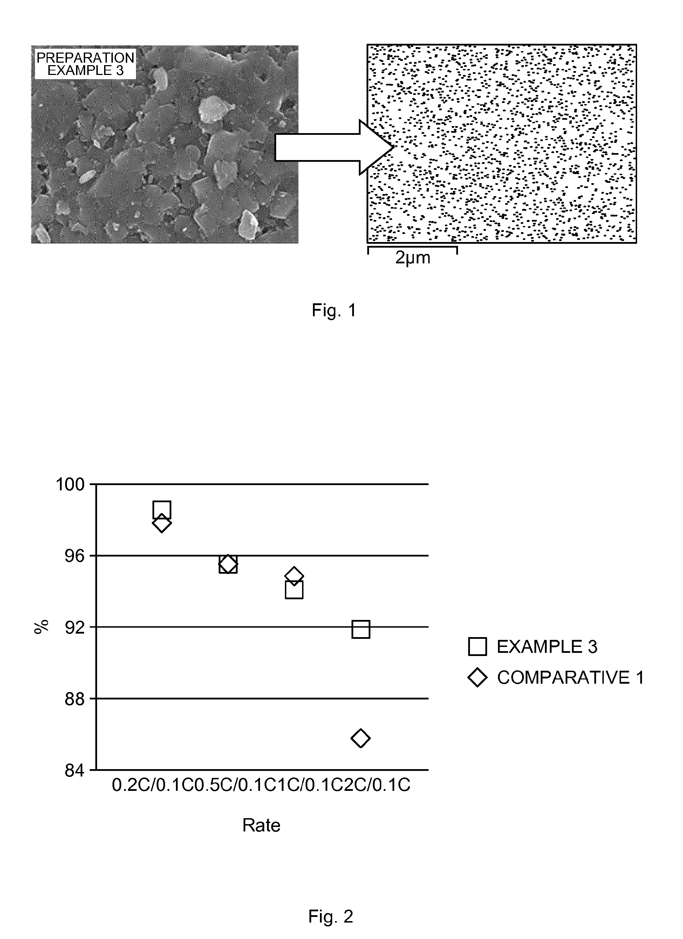

Indium oxide (In₂O₃, about 100 nm) was mixed with ethyl alcohol for 1 hour to prepare a coating solution. Contents of a positive electrode active material were controlled to obtain contents of indium oxide coating on 0.82LiNi_{0.58}Co_{0.20}Mn_{0.22}O₂·0-18Li₂MnO₃ as described in Table 1, and added to the coating solution and stirred for 6 hours. Next, the mixtures were dried in an oven at 100 °C for 12 hours to obtain powders. The powders were put in an electric furnace and heat treated at 650°C (heating rate of 2 °C/min) for 12 hours. The prepared positive electrode active materials were observed by a scanning electron microscope (SEM) and energy dispersive spectroscopy (EDS) mapping to identify uniformity of the coatings. Results of SEM and EDS mapping for the positive electrode active material of Example 3 are illustrated in FIG. 1.

**[Table 1]**

| Preparation Example | 1 | 2 | 3 | 4 | 5 | 6 |
|---|---|---|---|---|---|---|
| Content of indium oxide coating (%) | 0.1 | 0.2 | 0.5 | 1 | 2 | 4 |

### Examples 1 to 6

Each positive electrode active material of Preparation Examples 1 to 6, a Super-P conductive agent, and a 6% polyvinylidene fluoride (PVDF) binder (in N-methyl-2-pyrrolidone (NMP)) were mixed and then casted on a thin aluminum plate when an appropriate viscosity was obtained. The thin aluminum plate was dried and then pressed to prepare an electrode. At this time, contents of the indium-coated positive electrode active material and the conductive agent were controlled to be 92 wt% and 4 wt%, respectively. Coin cells were prepared by using the prepared electrodes and according to a typically known method and a battery configuration.

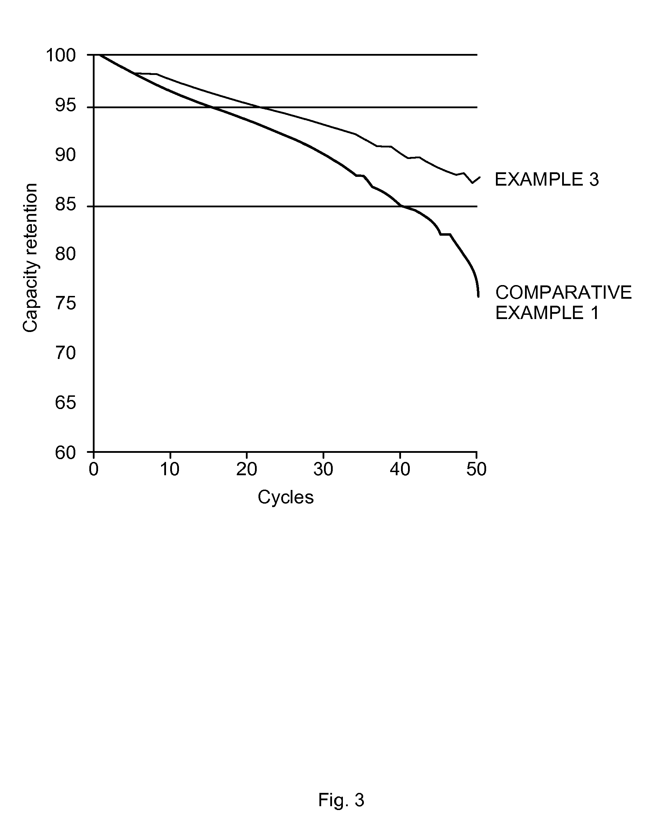

Changes in discharge capacity and rate characteristics according to a cycle were measured by using a battery testing system. The results thereof are presented in Table 2 and FIGS. 2 and 3.

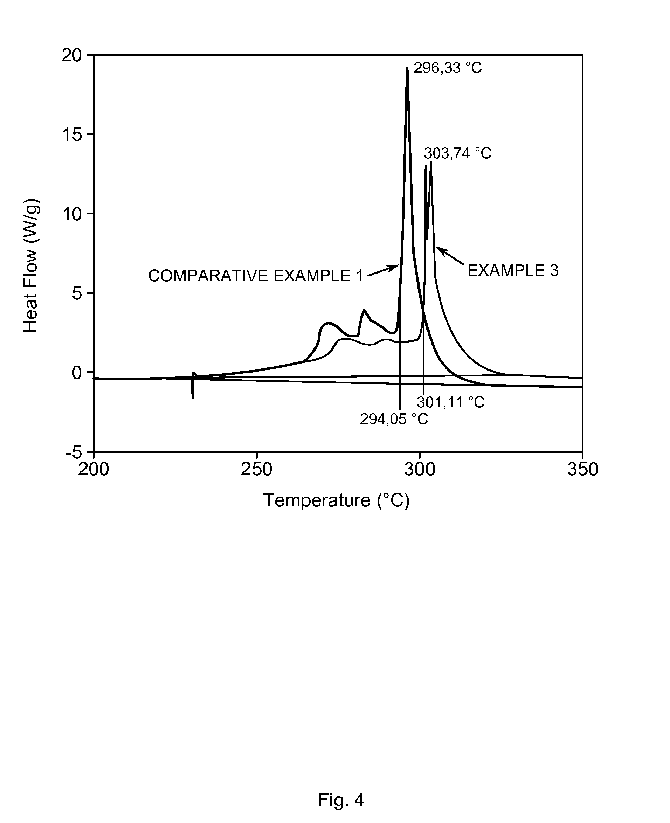

Also, the prepared battery of Example 3 was charged and its positive electrode was then collected to measure thermal stability of the positive electrode after lithium deintercalation by differential scanning calorimetry (DSC). The results thereof are presented in FIG. 4.

### Comparative Example 1

An electrode and a coin cell were prepared in the same manner as Example 1 except that an uncoated positive electrode active material (0.82LiNi_{0.58}Co_{0.20}Mn_{0.22}O₂·0-18Li₂MnO₃) was used, and changes in discharge capacity according to a cycle, rate characteristics, and DSC were measured. The results thereof are presented in Table 2 and FIGS. 2, 3 and 4.

**[Table 2]**

| Category | Positive electrode active material | | Initial capacity (mAh/g) | Capacity retention ratio (%) after charge and discharge @25°C, 50 cycles | Changes in rate characteristics (2C/0.1C,%) | DSC (°C) |
|---|---|---|---|---|---|---|
| | Preparation Example | Addition amount of Indium (%) | | | | |
| Example 1 | Preparation Example 1 | 0.1 | 183 | 74 | 75 | 297 |
| Example 2 | Preparation Example 2 | 0.2 | 182 | 79 | 77 | 300 |
| Example 3 | Preparation Example 3 | 0.5 | 182 | 88 | 92 | 303 |
| Example 4 | Preparation Example 4 | 1 | 180 | 84 | 83 | 300 |
| Example 5 | Preparation Example 5 | 2 | 179 | 80 | 83 | 297 |
| Example 6 | Preparation Example 6 | 4 | 176 | 81 | 82 | 297 |
| Comparative Example 1 | - | 0 | 183 | 75 | 76 | 296 |

As shown in Table 2, the indium compound coated positive electrode active materials according to the present disclosure had high capacity as well as improved thermal stability and electrical conductivity, and thus, exhibited excellent rate characteristics. In particular, according to the DSC measurements, since Examples 1 to 6 exhibited exothermic peaks at temperatures higher than that of Comparative Example 1 and calorific values of Examples 1 to 6 were also lower than that of Comparative Example 1, it may be confirmed that thermal stabilities of the positive electrode active materials were improved.

A positive electrode active material according to embodiments may not only decrease internal resistance of a positive electrode to prevent a decrease in voltage at the end of discharge and exhibit excellent rate characteristics due to good electrical conductivity, but may also prevent degradation of cycle characteristics even in the case that charge and discharge are repeated at a high voltage.

Since the positive electrode active material according to the embodiments has a coating layer formed of an indium-based compound, collapse of its crystal structure may be prevented by blocking a reaction between an electrolyte solution and transition metal.

## Claims

1. A positive electrode active material comprising layer-structured lithium transition metal composite oxide expressed by the following Chemical Formula [1]:
x LiMO₂·(1-x) Li₂MnO₃ [1]
where M is one or more selected from the group consisting of magnesium (Mg), nickel (Ni), cobalt (Co), chromium (Cr), aluminum (Al), vanadium (V), iron (Fe), copper (Cu), zinc (Zn), titanium (Ti), strontium (Sr), manganese (Mn), boron (B), and lanthanum (La), and 0<x<1, and
wherein a surface of the lithium transition metal composite oxide is coated with one or more indium (In)-based compounds selected from the group consisting of indium oxides and alloys including indium.

2. The positive electrode active material of claim 1, wherein the indium-based compound is one or more selected from the group consisting of In₂O₃, ITO (tin (Sn)-doped In₂O₃), IZO (Zn-doped In₂O₃), ITZO (Sn/Zn co-doped In₂O₃), IAO (antimony (Sb)-doped In₂O₃), ZnIn₂O₅, Zn₃In₂O₆, Zn₅In₂O₈, CdIn₂O₄, MgIn₂O₄, AgInO₂, and an alloy of indium oxide and one or more of Zn oxide, Sn oxide, gallium (Ga) oxide, thallium (Tl) oxide, Mg oxide, tungsten (W) oxide, and Al oxide.

3. The positive electrode active material of claim 2, wherein the alloy of indium oxide is one or more selected from the group consisting of ZnO-In₂O₃, SnO₂-In₂O₃, MgO-In₂O₃, Ga₂O-In₂O₃, and Al₂O₃-In₂O₃.

4. The positive electrode active material of one of the preceding claims, wherein the indium-based compound is coated in an amount range of 0.2 wt% to 6 wt% based on the lithium transition metal composite oxide.

5. The positive electrode active material of one of the preceding claims, wherein a particle diameter of the indium-based compound is in a range of 10 nm to 50 µm.

6. A lithium secondary battery comprising the positive electrode active material of any one of claims 1 to 5.

7. A method of preparing a positive electrode active material, the method comprising the steps of:
(i) coating lithium transition metal composite oxide expressed by the following Chemical Formula [1]:
x LiMO₂·(1-x) Li₂MnO₃ [1],
where M is one or more selected from the group consisting of magnesium (Mg), nickel (Ni), cobalt (Co), chromium (Cr), aluminum (Al), vanadium (V), iron (Fe), copper (Cu), zinc (Zn), titanium (Ti), strontium (Sr), manganese (Mn), boron (B), and lanthanum (La), and 0<x<1,
by adding and stirring one or more indium (In)-based compounds selected from the group consisting of indium oxides and alloys including indium; and
(ii) heat treating powder obtained after the coating.

8. The method of claim 7, wherein the coating is performed by using a dry coating method or wet coating method.

9. The method of claim 8, wherein the wet coating method further comprises preparing a coating solution in which an indium-based compound is mixed with a solvent.

10. The method of claim 9, wherein the solvent is one or more selected from the group consisting of alcohol having a carbon number of 1 to 6, toluene, hexane, acetone, ether, tetrahydrofuran, dichloromethane, dichloroethane, ethyl acetate, xylene, benzene, ethylbenzene, methylethylketone, dimethyl sulfoxide, dimethylformamide, hexamethylphosphoramide, and methylisobutylketone.

11. The method of claim 7, wherein the indium-based compound is added in an amount range of 0.2 wt% to 6 wt% based on the lithium transition metal composite oxide.

12. The method of claim 7, wherein the heat treating is performed at a temperature in a range of 300°C to 700°C for 1hour to 12 hours.
